# EUROPEAN PATENT SPECIFICATION

(11) **EP 3 130 985 B1**
(45) Date of publication and mention of the grant of the patent: **25.08.2021**
(21) Application number: 16165244.1
(22) Date of filing: 14.04.2016
(51) Int. Cl.: G06F 3/041, G06F 3/044

(54) **METHOD AND DEVICE FOR DETECTING PRESSURE IN MOBILE TERMINAL**
VERFAHREN UND VORRICHTUNG ZUR DETEKTION VON DRUCK IN EINEM MOBILEN ENDGERÄT
PROCÉDÉ ET DISPOSITIF POUR DÉTECTER LA PRESSION DANS UN TERMINAL MOBILE

(30) Priority: 12.08.2015 CN 201510494192
(43) Date of publication of application: 15.02.2017
(73) Proprietor: Xiaomi Inc., Beijing 100085 (CN)
(72) Inventor: LI, Guosheng, 100085 Beijing Haidian District (CN); LIU, Anyu, 100085 Beijing Haidian District (CN); PAN, Shuangquan, 100085 Beijing Haidian District (CN)
(74) Representative: Reeve, Nicholas Edward

(56) References cited:
- EP-A1- 2 472 363
- WO-A1-2014/180142
- US-A1- 2013 050 126
- US-A1- 2014 062 941
- US-A1- 2014 247 239
- US-A1- 2015 193 041

## Description

### FIELD

The present disclosure relates to the display technology field, and more particularly to a method and a device for detecting pressure in a mobile terminal.

### BACKGROUND

As an increasing development of liquid crystal display technology, functions equipped in a liquid crystal display technology are increased, such that a touch location may be sensed. With a layer of a touch panel added on the liquid crystal display, coordinate positions where a capacitance value changes may be determined by detecting the capacitance change in the touch panel, such that the touch location on the liquid crystal display for a user is determined. The method can only provide a way to determine two dimensional coordinates on the liquid crystal display, but cannot provide pressure sensing in three dimensional coordinates.

US 2014/0062941 A1 describes one system for detecting, in a liquid crystal display, a variation in capacitance, or current, dependent on the pressure applied to the liquid crystal display. The system measures the capacitance between a first sensor line, and a second sensor line, the distance and therefore capacitance, between the first sensor line and the second sensor line varying in dependence on the pressure applied to the liquid crystal display. Further touch sensors are known from EP 2 472 363 A1, US 2014/247239 A1, US 2014/247239 A1, WO 2014/180142 A1, US 2013/050126 A1, US 2015/193041 A1.

### SUMMARY OF THE INVENTION

In order to solve problems in the related art, the present disclosure provides a method and a device for detecting pressure in a mobile terminal. The technical solutions are described as follows.

According to embodiments of a first aspect of the present disclosure, a method for detecting pressure in a mobile terminal is provided, in which, the mobile terminal has a liquid crystal display, and a transparent electrode, consisting of a plurality of transparent electrodes in a transverse and parallel arrangement and a plurality of transparent electrodes in a longitudinal and parallel arrangement, is arranged in a liquid crystal layer of the liquid crystal display. The method includes: detecting a capacitance value between the transparent electrode and a support array in the liquid crystal layer of the liquid crystal display; and determining a pressure value performed by an operating member on the liquid crystal display according to the capacitance value detected. The step of detecting a capacitance value between the transparent electrode and a support array in the liquid crystal layer of the liquid crystal display comprises: detecting the capacitance value between the transparent electrode and the support array in the liquid crystal layer of the liquid crystal display in a blanking interval of the liquid crystal display.

The step of detecting a capacitance value between the transparent electrode and a support array in the liquid crystal layer of the liquid crystal display includes: detecting a voltage value in the transparent electrode, comprising detecting the voltage value of each transparent electrode one by one according to a first preset period, or detecting the voltage value of each transparent electrode simultaneously according to a second preset period; and calculating the capacitance value between the transparent electrode and the support array in the liquid crystal layer of the liquid crystal display according to the voltage value.

The step of calculating the capacitance value between the transparent electrode and the support array in the liquid crystal layer of the liquid crystal display according to the voltage value includes: calculating a capacitance value corresponding to each transparent electrode according to the voltage value of each transparent electrode; and choosing a maximum of capacitance values calculated as the capacitance value between the transparent electrode and the support array in the liquid crystal layer of the liquid crystal display.

After calculating the capacitance value corresponding to each transparent electrode, the method further includes: choosing a transparent electrode having a capacitance value different from that detected when the liquid crystal display is not pressed by the operating member; obtaining a row identifier and a column identifier of the transparent electrode chosen; and determining a press location on the liquid crystal display according to the row identifier and the column identifier obtained.

Alternatively, determining a pressure value performed on the liquid crystal display according to the capacitance value detected includes: obtaining the pressure value corresponding to the capacitance value detected according to a preset correspondence between capacitance values and pressure values, and determining the pressure value performed on the liquid crystal display according to the pressure value obtained.

According to embodiments of a second aspect of the present disclosure, a device for detecting pressure in a mobile terminal is provided, in which, the mobile terminal has a liquid crystal display, and a transparent electrode, consisting of a plurality of transparent electrodes in a transverse and parallel arrangement and a plurality of transparent electrodes in a longitudinal and parallel arrangement, is arranged in a liquid crystal layer of the liquid crystal display. The device includes: a detecting module, configured to detect a capacitance value between the transparent electrode and a support array in the liquid crystal layer of the liquid crystal display; and a first determining module, configured to determine a pressure value performed by an operating member on the liquid crystal display according to the capacitance value detected. The detecting module is configured to: detect the capacitance value between the transparent electrode and the support array in the liquid crystal layer of the liquid crystal display in a blanking interval of the liquid crystal display.

The detecting module includes: a detecting unit, configured to detect a voltage value in the transparent electrode, comprising a first detecting sub-unit (90111), configured to detect a voltage value of each transparent electrode one by one according to a first preset period, or a second detecting sub-unit (90112), configured to detect a voltage value of each transparent electrode simultaneously according to a second preset period; and a calculating unit, configured to calculate the capacitance value between the transparent electrode and the support array in the liquid crystal layer of the liquid crystal display according to the voltage value.

The calculating unit includes: a calculating sub-unit, configured to calculate a capacitance value corresponding to each transparent electrode according to the voltage value in each transparent electrode; and a choosing sub-unit, configured to choose a maximum of capacitance value calculated as the capacitance value between the transparent electrode and the support array in the liquid crystal layer of the liquid crystal display.

The device further includes: a choosing module, configured to choose a transparent electrode having a capacitance value different from that detected when the liquid crystal display is not pressed by the operating member; an obtaining module, configured to obtain a row identifier and a column identifier of the transparent electrode chosen; and a second determining module, configured to determine a press location on the liquid crystal display according to the row identifier and the column identifier obtained.

Alternatively, the first determining module is configured to: obtain the pressure value corresponding to the capacitance value detected according to a preset correspondence between capacitance values and pressure values, and determine the pressure value performed on the liquid crystal display according to the pressure value obtained.

According to third aspect of the present disclosure, a device for detecting pressure in a mobile terminal is provided, in which, the mobile terminal has a liquid crystal display, a transparent electrode is arranged in a liquid crystal layer of the liquid crystal display, and the device includes: a processor; and a memory, configured to store instructions executable by the processor; wherein, the processor is configured to: detect a capacitance value between the transparent electrode and a support array in the liquid crystal layer of the liquid crystal display; and determine a pressure value performed by an operating member on the liquid crystal display according to the capacitance value detected. The processor is further configured to detect a capacitance value between the transparent electrode and a support array in the liquid crystal layer of the liquid crystal display by detecting the capacitance value between the transparent electrode and the support array in the liquid crystal layer of the liquid crystal display in a blanking interval of the liquid crystal display.

The technical solutions provided in the present disclosure may include the following beneficial effects.

The pressure value on the liquid crystal display is determined by detecting the capacitance value between the transparent electrode and the support array in the liquid crystal layer of the liquid crystal display, such that detecting a third dimensional pressure sensing other than touch sensing in the liquid crystal display is realized, more functions may be realized according to the pressure value detected, and human-computer interaction is improved.

### BRIEF DESCRIPTION OF THE DRAWINGS

These and other aspects and advantages of embodiments of the present disclosure will become apparent and more readily appreciated from the following descriptions made with reference to the drawings.
Fig. 1 is a flow chart of a method for detecting pressure in a mobile terminal according to an example embodiment of the present disclosure.
Fig. 2 is a schematic diagram of a liquid crystal display in a method for detecting pressure in a mobile terminal according to an example embodiment of the present disclosure.
Fig. 3 is a schematic diagram of a liquid crystal layer in a method for detecting pressure in a mobile terminal according to an example embodiment of the present disclosure.
Fig. 4 is a schematic diagram of another liquid crystal layer in a method for detecting pressure in a mobile terminal according to an example embodiment of the present disclosure.
Fig. 5 is a schematic diagram of a transparent electrode consisting of a plurality of transparent electrodes in a transverse and parallel arrangement in a method for detecting pressure in a mobile terminal according to an example embodiment of the present disclosure.
Fig. 6 is a schematic diagram of a transparent electrode consisting of a plurality of transparent electrodes in a longitudinal and parallel arrangement in a method for detecting pressure in a mobile terminal according to an example embodiment of the present disclosure.
Fig. 7 is a schematic diagram of a transparent electrode consisting of a plurality of transparent electrodes in a transverse and parallel arrangement and a plurality of transparent electrodes in a longitudinal and parallel arrangement in a method for detecting pressure in a mobile terminal according to an example embodiment of the present disclosure.
Fig. 8 is a flow chart of a method for detecting pressure in a mobile terminal according to an example embodiment of the present disclosure.
Fig. 9 is a block diagram of a device for detecting pressure in a mobile terminal according to an example embodiment of the present disclosure.
Fig. 10 is a block diagram of a detecting module in a device for detecting pressure in a mobile terminal according to an example embodiment of the present disclosure.
Fig. 11 is a block diagram of a detecting unit in a device for detecting pressure in a mobile terminal according to an example embodiment of the present disclosure.
Fig. 12 is a block diagram of a calculating unit in a device for detecting pressure in a mobile terminal according to an example embodiment of the present disclosure.
Fig. 13 is a block diagram of a device for detecting pressure in a mobile terminal (a general structure of a mobile terminal) according to an example embodiment of the present disclosure.

### DETAILED DESCRIPTION

In order to make the technical solutions and advantages of the present disclosure clearer, reference will be made in detail to embodiments of the present disclosure.

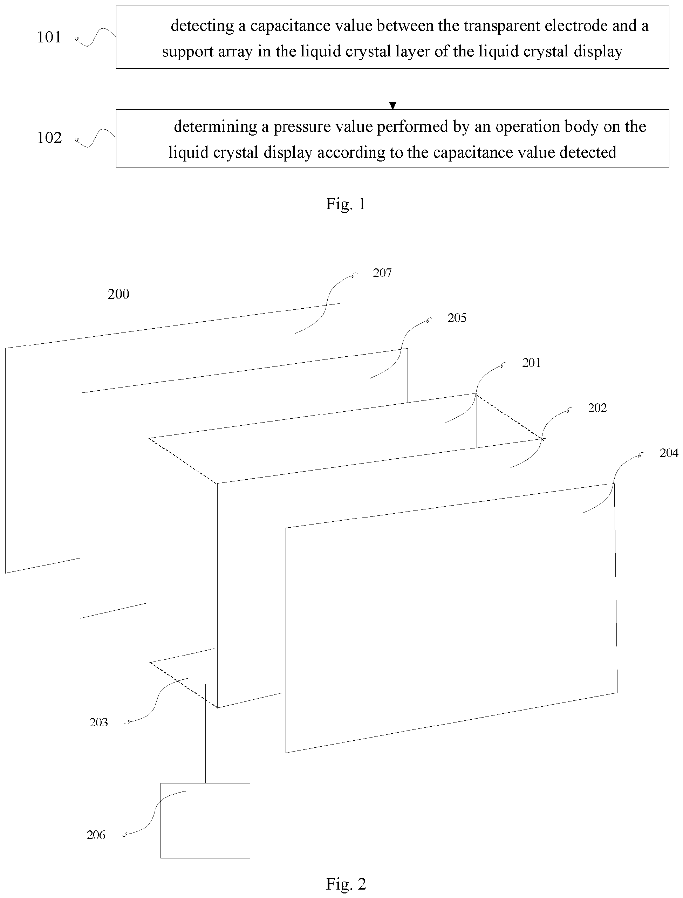

An example embodiment of the present disclosure provides a method for detecting pressure in a mobile terminal. Referring to Fig. 1, the mobile terminal has a liquid crystal display, a transparent electrode is arranged in a liquid crystal layer of the liquid crystal display, and the method includes following steps.

In step 101, a capacitance value between the transparent electrode and a support array in the liquid crystal layer of the liquid crystal display is detected.

In step 102, a pressure value performed by an operating member on the liquid crystal display is determined according to the capacitance value detected. In this context, the operating member shall be understood to include any object capable of interacting with the touch screen of the liquid crystal display, such as a finger, stylus or other input device. The pressure value detected is associated with the interaction of the operating member on the liquid crystal display (200). The interaction may be a press or a non-press of the operating member, and may be applied with different levels of force.

Fig. 2 is a schematic diagram of a liquid crystal display in the method for detecting pressure in a mobile terminal according to an example embodiment of the present disclosure. The liquid crystal display 200 includes: a TFT (Thin Film Transistor) array glass substrate 201, a color filter 202, a liquid crystal layer 203 arranged between the TFT array glass substrate 201 and the color filter 202, an up polarizer 204 arranged on a side nonadjacent to the liquid crystal layer 203 of the color filter 202, and a down polarizer 205 arranged on a side nonadjacent to the liquid crystal layer 203 of the TFT array glass substrate 201.

The liquid crystal layer 203 also includes a support array 2031 and a transparent electrode 2032, the support array 2031 and the transparent electrode 2032 are respectively arranged on a side adjacent to the TFT array glass substrate 201 of the liquid crystal layer 203 and a side adjacent to the color filter 202 of the liquid crystal layer 203, and liquid crystal is filled between the support array 2031 and the transparent electrode 2032.

Alternatively, in embodiments of the present disclosure, locations of the support array 2031 and the transparent electrode 2032 in the liquid crystal layer 203 may not be limited. The support array 2031 may be arranged on any one of the side adjacent to the TFT array glass substrate 201 of the liquid crystal layer 203 and the side adjacent to the color filter 202 of the liquid crystal layer 203. Accordingly, the transparent electrode 2032 is arranged on the other one of the side adjacent to the TFT array glass substrate 201 and the side adjacent to the color filter 202 of the liquid crystal layer 203.

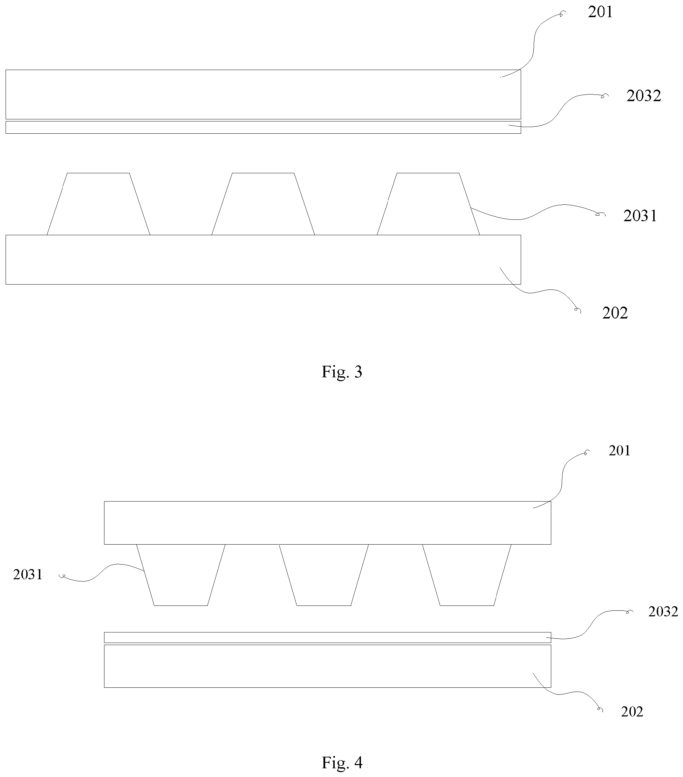

Therefore, as shown in Fig. 3, Fig. 3 is a schematic diagram of the liquid crystal layer 203. The arrangement of the support array 2031 and the transparent electrode 2032 may be: the support array 2031 is arranged on the side adjacent to the TFT array glass substrate 201 of the liquid crystal layer 203, and the transparent electrode 2032 is arranged on the side adjacent to the color filter 202 of the liquid crystal layer 203.

In addition, as shown in Fig. 4, Fig. 4 is a schematic diagram of another liquid crystal layer 203. The arrangement of the support array 2031 and the transparent electrode 2032 may also be: the support array 2031 is arranged on the side adjacent to the color filter 202 of the liquid crystal layer 203, and the transparent electrode 2032 is arranged on the side adjacent to the TFT array glass substrate 201 of the liquid crystal layer 203.

Alternatively, the liquid crystal display 200 also includes a control chip 206, and the transparent electrode 2032 is electrically connected with the control chip 206. The control chip 206 may be a MCU (Micro Controller Unit). The MCU also includes an A/D converter, which may convert a voltage value signal detected by the transparent electrode 2032 from an analog signal to a digital signal, and finally calculate a capacitance value.

In embodiments which do not fall within the scope of the claims, the transparent electrode 2032 may be a whole transparent electrode. In embodiments of the invention, the transparent electrode 2032 consists of a plurality of transparent electrodes.

In a first case which does not fall within the scope of the claims, the transparent electrode 2032 is a whole transparent electrode.

The support array 2031 and the transparent electrode 2032 have no direct contact in the liquid crystal layer 203, and there is a certain spatial distance between the support array 2031 and the transparent electrode 2032. After power on, a capacitor is formed between the support array 2031 and the transparent electrode 2032. When the liquid crystal display 200 is not pressed by an operating member, a distance between the support array 2031 and the transparent electrode 2032 is fixed (the error may be ignored), and thus a capacitance value of the capacitor formed between the support array 2031 and the transparent electrode 2032 after power on is relatively fixed. Therefore, the capacitance value of the capacitor formed between the support array 2031 and the transparent electrode 2032 when the liquid crystal display 200 is not pressed by the operating member may be pre-detected and used as a reference to determine whether the liquid crystal display 200 is pressed by the operating member.

In a second case, the transparent electrode 2032 consists of a plurality of transparent electrodes.

There are three arrangements for the second case: in an arrangement which does not fall within the scope of the claims, the transparent electrode 2032 consists of a plurality of transparent electrodes in a transverse and parallel arrangement; in a further arrangement which does not fall within the scope of the claims, the transparent electrode 2032 consists of a plurality of transparent electrodes in a longitudinal and parallel arrangement; and, in an arrangement according to the invention, the transparent electrode 2032 consists of a plurality of transparent electrodes in a transverse and parallel arrangement and a plurality of transparent electrodes in a longitudinal and parallel arrangement; in which, there is a preset distance between each two transparent electrodes in a transverse and parallel arrangement; or there is a preset distance between each two transparent electrodes in a longitudinal and parallel arrangement.

The support array 2031 has no direct contact with each transparent electrode in the transparent electrode 2032 in the liquid crystal layer 203, and there is a certain spatial distance between the support array 2031 and each transparent electrode in the transparent electrode 2032. After power on, a capacitor is formed between the support array 2031 and each transparent electrode in the transparent electrode 2032, and a number of capacitors is corresponding to a number of transparent electrodes included in the transparent electrode 2032. When the liquid crystal display 200 is not pressed by an operating member, a distance between the support array 2031 and each transparent electrode in the transparent electrode 2032 is fixed (the error may be ignored), and thus a capacitance value of each capacitor formed between the support array 2031 and each transparent electrode in the transparent electrode 2032 after power on is relatively fixed. Therefore, the capacitance value of each capacitor formed between the support array 2031 and each transparent electrode in the transparent electrode 2032 when the liquid crystal display 200 is not pressed by the operating member may be pre-detected, and finally the pre-detected capacitance value corresponding to each transparent electrode may be used as a reference to determine whether the liquid crystal display 200 is pressed by the operating member. Generally, the distance between the support array 2031 and each transparent electrode in the transparent electrode 2032 is identical, and therefore the capacitance value of each capacitor formed between the support array 2031 and each transparent electrode in the transparent electrode 2032 may be identical when the liquid crystal display 200 is not pressed by the operating member, such that the capacitance value calculated for any one of the transparent electrodes may be used as the capacitance value when the liquid crystal display 200 is not pressed by the operating member.

In embodiments of the present disclosure, the operating member includes but shall not be limited to an operation, control or input device or body, such as a fingertip or a finger knuckle and/or a stylus.

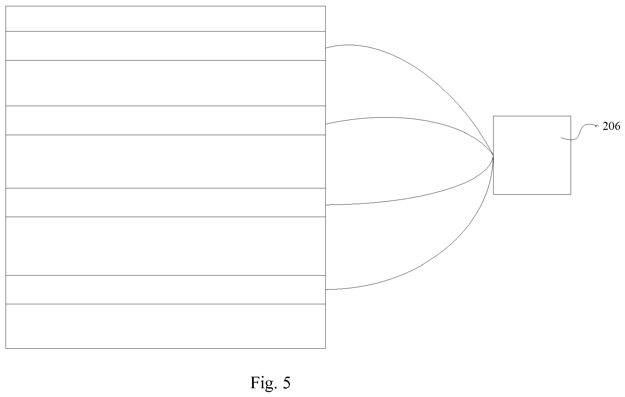

As shown in Fig. 5, Fig. 5 is a schematic diagram of a transparent electrode consisting of a plurality of transparent electrodes in a transverse and parallel arrangement.

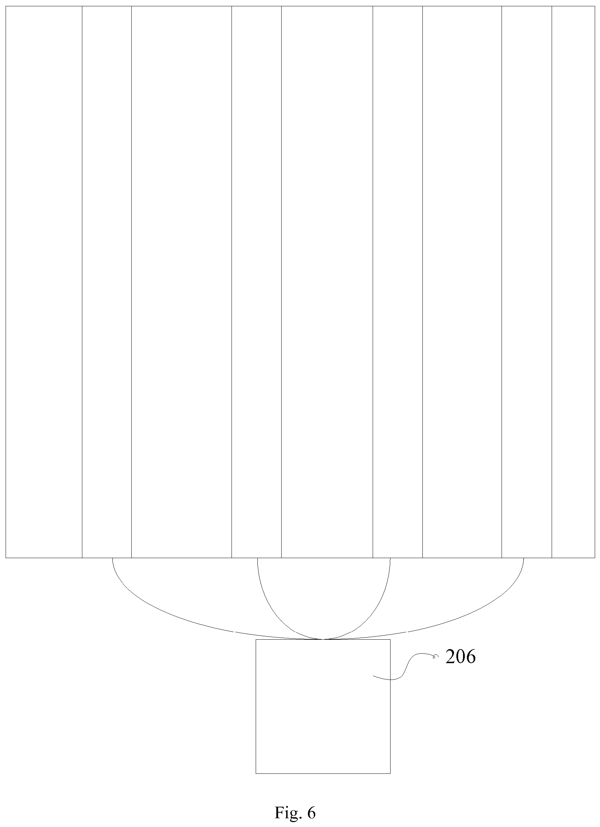

As shown in Fig. 6, Fig. 6 is a schematic diagram of a transparent electrode consisting of a plurality of transparent electrodes in a longitudinal and parallel arrangement.

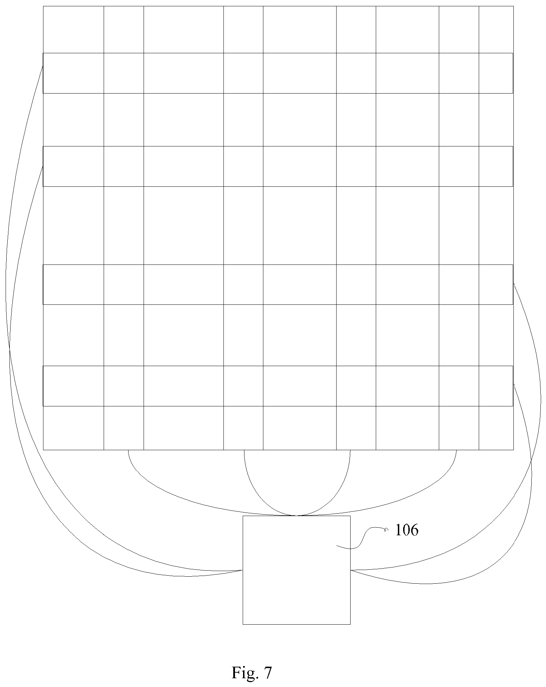

As shown in Fig. 7, Fig. 7 is a schematic diagram of a transparent electrode consisting of a plurality of transparent electrodes in a transverse and parallel arrangement and a plurality of transparent electrodes in a longitudinal and parallel arrangement.

Alternatively, in embodiments of the present disclosure, as shown in Fig. 2, the liquid crystal display 200 also includes a backlight 207.

The backlight 207 is arranged on a side nonadjacent to the TFT array glass substrate 201 of the down polarizer 205.

Alternatively, if the liquid crystal display 200 is a LCD (Liquid Crystal Display), the liquid crystal display 200 includes the backlight 207; if the liquid crystal display 200 is an OLED (Organic Light-Emitting Diode), the liquid crystal display 200 does not include the backlight 207.

In embodiments of the present disclosure, the pressure value on the liquid crystal display is determined by detecting the capacitance value between the transparent electrode and the support array in the liquid crystal layer of the liquid crystal display, such that detecting a third dimensional pressure sensing other than touch sensing in the liquid crystal display is realized, more functions may be realized according to the pressure value detected, and human-computer interaction is improved.

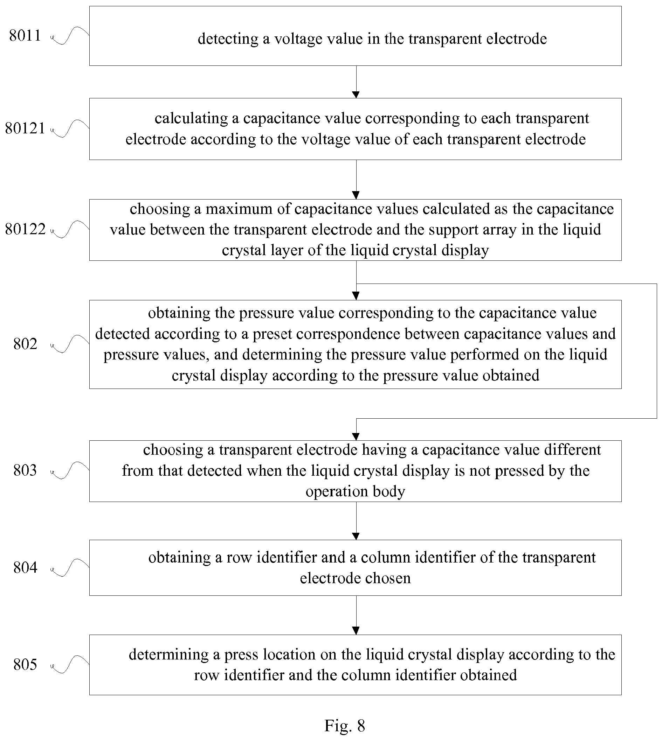

Another example embodiment of the present disclosure provides a method for detecting pressure in a mobile terminal. Referring to Fig. 8, this embodiment is applied in a mobile terminal, the mobile terminal has a liquid crystal display, a transparent electrode is arranged in a liquid crystal layer of the liquid crystal display, and the method includes steps as follows.

In step 801, a capacitance value between the transparent electrode and a support array in the liquid crystal layer of the liquid crystal display is detected.

A control chip sends a detecting instruction to the transparent electrode, and the transparent electrode detects a voltage value between the transparent electrode and the support array according to the detecting instruction received, and then returns a detecting result to the control chip, and the control chip calculates the capacitance value according to the voltage value. Accordingly, step 801 may be realized by steps as follows.

In step 8011, a voltage value in the transparent electrode is detected.

In a first case which does not fall within the scope of the claims, the transparent electrode may be a whole transparent electrode. After power on, a capacitor is formed between the support array and the transparent electrode, and thus only one voltage value will be detected. Accordingly, the control chip only sends one detecting instruction directly to the transparent electrode.

In a second case, the transparent electrode consists of a plurality of transparent electrodes in a transverse and parallel arrangement and a plurality of transparent electrodes in a longitudinal and parallel arrangement. After power on, a capacitor is formed between the support array and each transparent electrode in the transparent electrode. Therefore, a number of capacitors may be determined by a number of transparent electrodes, and further a number of voltage values detected may be determined.

Since there are multiple transparent electrodes in a sensor circuit, the control chip needs to control each transparent electrode independently. In embodiments of the present disclosure, two ways for detecting control are provided as follows.

Accordingly, in step 8011, detecting a voltage value in the transparent electrode includes following two ways.

In a first way, a voltage value of each transparent electrode is detected one by one according to a first preset period.

In a second way, a voltage value of each transparent electrode is detected simultaneously according to a second preset period.

If the detecting instructions are sent simultaneously, the control chip needs to be equipped with a plurality of A/D converters, so as to process data returned by each transparent electrode.

According to the invention, the transparent electrode consists of a plurality of transparent electrodes in a transverse and parallel arrangement and a plurality of transparent electrodes in a longitudinal and parallel arrangement, a row identifier or a column identifier of each transparent electrode is preset, in which, rows and columns may be set corresponding to the arrangement for each transparent electrode in a transverse and parallel arrangement or in a longitudinal and parallel arrangement. The location of each transparent electrode in the liquid crystal display may be pre-determined according to the row identifier or the column identifier.

In step 8012, the capacitance value between the transparent electrode and the support array in the liquid crystal layer of the liquid crystal display is calculated according to the voltage value.

A correspondence between capacitance values and voltage values may be preset, and the capacitance value is directly obtained from the correspondence according to the voltage value detected.

For the first case in step 8011: according to an embodiment which does not fall within the scope of the claims, there is only one capacitance value detected, i.e. the transparent electrode is a whole transparent electrode, the pressure value may be obtained directly from a correspondence between capacitance values and pressure values and used as the pressure value detected by the liquid crystal display.

Alternatively, the capacitance value may be pre-determined when the liquid crystal display is not pressed by the operating member, and then the pressure value corresponding to the capacitance value may be calculated if the capacitance value detected is different from that detected when the liquid crystal display is not pressed by the operating member.

For the second case in step 8011: according to the invention, there are a plurality of capacitance values detected, i.e. the transparent electrode consists of a plurality of transparent electrodes in a transverse and parallel arrangement and a plurality of transparent electrodes in a longitudinal and parallel arrangement, one or more capacitance values need to be chosen from the plurality of capacitance values, and then the pressure value detected by the liquid crystal display is determined according to the capacitance value chosen.

Therefore, step 8012 may be realized by steps as follows.

In step 80121, a capacitance value corresponding to each transparent electrode is calculated according to the voltage value of each transparent electrode.

In step 80122, a maximum of capacitance values calculated is chosen as the capacitance value between the transparent electrode and the support array in the liquid crystal layer of the liquid crystal display.

Alternatively, for step 801, in order to avoid interference of the liquid crystal display 200's scanning to detecting voltage values in the transparent electrode, step 801 may be executed when the liquid crystal display 200 is in a blanking interval, and step 801 may be: detecting the capacitance value between the transparent electrode and a support array in the liquid crystal layer of the liquid crystal display in a blanking interval of the liquid crystal display.

In step 802, the pressure value corresponding to the capacitance value detected is obtained according to a preset correspondence between capacitance values and pressure values, and the pressure value performed on the liquid crystal display is determined according to the pressure value obtained.

A correspondence between capacitance values and pressure values is pre-stored, and the pressure value is directly obtained from the correspondence according to the voltage value calculated.

The pressure value performed on the liquid crystal display by the operating member may be determined after executing step 802, and a process of obtaining a press location after executing step 803 may be parallel to step 802, and may also be after step 802, which shall not be limited.

In step 803, a transparent electrode having a capacitance value different from that detected when the liquid crystal display is not pressed by the operating member is chosen.

Before executing the embodiment of the present disclosure, the capacitance value may be pre-detected when the liquid crystal display is not pressed by the operating member. If the transparent electrode consists of a plurality of transparent electrodes in a transverse and parallel arrangement and a plurality of transparent electrodes in a longitudinal and parallel arrangement, the detected voltage value of any transparent electrode may be used as a reference to calculate the capacitance value when the liquid crystal display is not pressed, since a voltage value of each transparent electrode detected when the liquid crystal display is not pressed is identical.

In this step, by choosing a transparent electrode having a capacitance value different from that detected when the liquid crystal display is not pressed, the transparent electrodes related to the press on the liquid crystal display may be chosen.

In step 804, a row identifier and a column identifier of the transparent electrode chosen are obtained.

Before executing the embodiment of the present disclosure, the row identifier or the column identifier of each transparent electrode may be preset. After the control chip sends a detecting instruction to each transparent electrode, a detecting result obtained includes not only voltage values, but also the row identifier or the column identifier of each transparent electrode.

Alternatively, a position calibration on the liquid crystal display may be performed according to the row identifier or the column identifier of each transparent electrode, such that a horizontal coordinate or a vertical coordinate of each transparent electrode in the liquid crystal display may be determined.

In step 805, a press location on the liquid crystal display is determined according to the row identifier and the column identifier obtained.

When the liquid crystal display is pressed by the operating member, the press location will obviously be corresponding to a plurality of transparent electrodes in transverse and longitudinal direction, and thus for each transparent electrode related to the press on the liquid crystal display, the transverse coordinate and the longitudinal coordinate in the liquid crystal display is determined according to the row identifier and the column identifier of each transparent electrode related to the press on the liquid crystal display, and then a press location on the liquid crystal display is determined according to the transverse coordinates and longitudinal coordinates.

In embodiments of the present disclosure, the pressure value on the liquid crystal display is determined by detecting the capacitance value between the transparent electrode and the support array in the liquid crystal layer of the liquid crystal display, such that detecting a third dimensional pressure sensing other than touch sensing in the liquid crystal display is realized, more functions may be realized according to the pressure value detected, and human-computer interaction is improved.

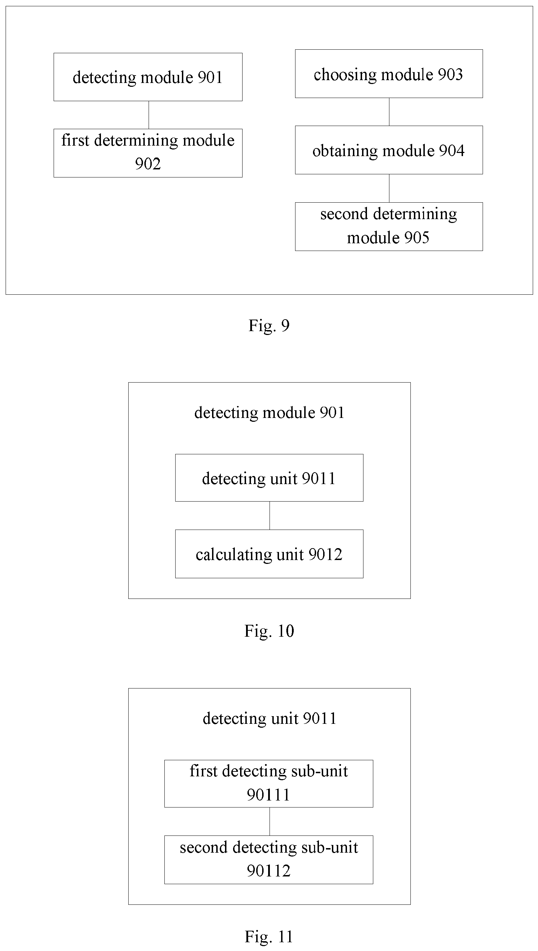

Corresponding to the method for detecting pressure in a mobile terminal provided in above example embodiments, another example embodiment of the present disclosure provides a device for detecting pressure in a mobile terminal, in which the mobile terminal has a liquid crystal display, and a transparent electrode is arranged in a liquid crystal layer of the liquid crystal display. Referring to Fig. 9, the device includes a detecting module 9012 and a first determining module 902.

The detecting module 901 is configured to detect a capacitance value between the transparent electrode and a support array in the liquid crystal layer of the liquid crystal display.

The first determining module 902 is configured to determine a pressure value performed by an operating member on the liquid crystal display according to the capacitance value detected.

As shown in Fig. 10, the detecting module 901 includes a detecting unit 9011 and a calculating unit 9012.

The detecting unit 9011 is configured to detect a voltage value in the transparent electrode.

The calculating unit 9012 is configured to calculate the capacitance value between the transparent electrode and the support array in the liquid crystal layer of the liquid crystal display according to the voltage value.

The transparent electrode consists of a plurality of transparent electrodes in a transverse and parallel arrangement and/or a plurality of transparent electrodes in a longitudinal and parallel arrangement, and as shown in Fig. 11, the detecting unit 9011 includes a first detecting sub-unit 90111.

The first detecting sub-unit 90111 is configured to detect a voltage value of each transparent electrode one by one according to a first preset period.

The transparent electrode consists of a plurality of transparent electrodes in a transverse and parallel arrangement and/or a plurality of transparent electrodes in a longitudinal and parallel arrangement, and as shown in Fig. 11, the detecting unit 9011 includes a second detecting sub-unit 90112.

The second detecting sub-unit 90112 is configured to detect a voltage value of each transparent electrode simultaneously according to a second preset period.

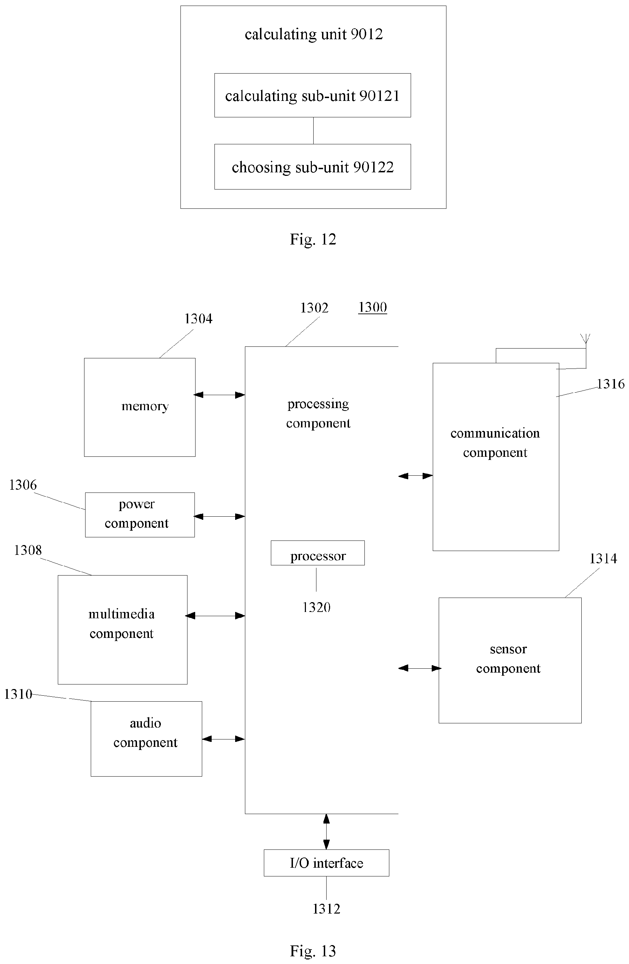

As shown in Fig. 12, the calculating unit 9012 includes a calculating sub-unit 90121 and a choosing sub-unit 90122.

The calculating sub-unit 90121 is configured to calculate a capacitance value corresponding to each transparent electrode according to the voltage value in each transparent electrode.

The choosing sub-unit 90122 is configured to choose a maximum of capacitance value calculated as the capacitance value between the transparent electrode and the support array in the liquid crystal layer of the liquid crystal display.

As shown in Fig. 9, the device further includes a choosing module 903, an obtaining module 904 and a second determining module 905.

The choosing module 903 is configured to choose a transparent electrode having a capacitance value different from that detected when the liquid crystal display is not pressed by the operating member.

The obtaining module 904 is configured to obtain a row identifier and a column identifier of the transparent electrode chosen.

The second determining module 905 is configured to determine a press location on the liquid crystal display according to the row identifier and the column identifier obtained.

The first determining module 902 is configured to obtain the pressure value corresponding to the capacitance value detected according to a preset correspondence between capacitance values and pressure values, and to determine the pressure value performed on the liquid crystal display according to the pressure value obtained.

The detecting module 901 is configured to detect the capacitance value between the transparent electrode and the support array in the liquid crystal layer of the liquid crystal display in a blanking interval of the liquid crystal display.

In embodiments of the present disclosure, the pressure value on the liquid crystal display is determined by detecting the capacitance value between the transparent electrode and the support array in the liquid crystal layer of the liquid crystal display, such that detecting a third dimensional pressure sensing other than touch sensing in the liquid crystal display is realized, more functions may be realized according to the pressure value detected, and human-computer interaction is improved.

Corresponding to the device for detecting pressure in a mobile terminal provided in above example embodiments, another example embodiment of the present disclosure provides a terminal 1300, as shown in Fig. 13. For example, the terminal 1300 may be a mobile phone, a computer, a digital broadcasting terminal, a messaging device, a game console, a tablet device, a fitness equipment, a Personal Digital Assistant PDA, etc.

Referring to Fig. 13, the terminal 1300 may include the following one or more components: a processing component 1302, a memory 1304, a power component 1306, a multimedia component 1308, an audio component 1310, an Input/Output (I/O) interface 1312, a sensor component 1314, and a communication component 1316.

The processing component 1302 typically controls overall operations of the terminal 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the terminal 1300. Examples of such data include instructions for any applications or methods operated on the terminal 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the terminal 1300. The power component 1306 may include a power management system, one or more power sources, and any other components associated with the generation, management, and distribution of power in the terminal 1300.

The multimedia component 1308 includes a screen providing an output interface between the terminal 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1308 includes a front camera and/or a rear camera. The front camera and the rear camera may receive external multimedia data while the terminal 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the intelligent terminal 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface for the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the terminal 1300. For instance, the sensor component 1314 may detect an open/closed status of the terminal 1300 and relative positioning of components (e.g. the display and the keypad of the terminal 1300). The sensor component 1314 may also detect a change in position of the terminal 1300 or of a component in the terminal 1300, a presence or absence of user contact with the terminal 1300, an orientation or an acceleration/deceleration of the terminal 1300, and a change in temperature of the terminal 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate wired or wireless communication between the terminal 1300 and other devices. The terminal 1300 can access a wireless network based on a communication standard, such as WIFI, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1304 including instructions. The above instructions are executable by the processor 1320 in the terminal 1300, for performing the above-described methods. For example, the non-transitory computer-readable storage medium may be a ROM, a RAM, a CD-ROM, a magnetic tape, a floppy disc, an optical data storage device, and the like.

The non-transitory computer readable storage medium have stored therein instruction that, when executed by a processor of a mobile terminal, cause the mobile terminal to execute a method for detecting pressure in a mobile terminal, in which, the mobile terminal has a liquid crystal display, a transparent electrode is arranged in a liquid crystal layer of the liquid crystal display, and the method includes: detecting a capacitance value between the transparent electrode and a support array in the liquid crystal layer of the liquid crystal display; and determining a pressure value performed by an operating member on the liquid crystal display according to the capacitance value detected.

In embodiments of the present disclosure, the pressure value on the liquid crystal display is determined by detecting the capacitance value between the transparent electrode and the support array in the liquid crystal layer of the liquid crystal display, such that detecting a third dimensional pressure sensing other than touch sensing in the liquid crystal display is realized, more functions may be realized according to the pressure value detected, and human-computer interaction is improved.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for detecting pressure in a mobile terminal, wherein, the mobile terminal has a liquid crystal display (200), a transparent electrode (2032), consisting of a plurality of transparent electrodes in a transverse and parallel arrangement and a plurality of transparent electrodes in a longitudinal and parallel arrangement, arranged in a liquid crystal layer (203) of the liquid crystal display (200), and the method comprises:
detecting (101) a capacitance value between the transparent electrode (2032) and a support array (2031) in the liquid crystal layer (203) of the liquid crystal display (200); and
determining (102) a pressure value on the liquid crystal display (200) according to the capacitance value detected, the pressure value associated with the interaction of an operating member on the liquid crystal display (200), wherein, detecting (101) a capacitance value between the transparent electrode (2032) and a support array (2031) in the liquid crystal layer (203) of the liquid crystal display (200) comprises:
detecting (8011) a voltage value in the transparent electrode (2032), comprising detecting the voltage value of each transparent electrode one by one according to a first preset period, or detecting the voltage value of each transparent electrode simultaneously according to a second preset period; and
calculating the capacitance value between the transparent electrode (2032) and the support array (2031) in the liquid crystal layer (203) of the liquid crystal display (200) according to the voltage value, comprising calculating (80121) a capacitance value corresponding to each transparent electrode according to the voltage value of each transparent electrode, and choosing (80122) a maximum of capacitance values calculated as the capacitance value between the transparent electrode (2032) and the support array (2031) in the liquid crystal layer (203) of the liquid crystal display (200),
after calculating (80121) the capacitance value corresponding to each transparent electrode, the method further comprises:
choosing (803) a transparent electrode having a capacitance value different from that detected when the liquid crystal display (200) is not pressed by the operating member;
obtaining (804) a row identifier and a column identifier of the transparent electrode chosen; and
determining (805) a press location on the liquid crystal display (200) according to the row identifier and the column identifier obtained.

2. The method according to claim 1, wherein, determining (102) a pressure value performed on the liquid crystal display (200) according to the capacitance value detected comprises:
obtaining (802) the pressure value corresponding to the capacitance value detected according to a preset correspondence between capacitance values and pressure values, and determining the pressure value performed on the liquid crystal display (200) according to the pressure value obtained.

3. The method according to claim 1 or 2, wherein, detecting (101) a capacitance value between the transparent electrode (2032) and a support array (2031) in the liquid crystal layer (203) of the liquid crystal display (200) comprises:
detecting the capacitance value between the transparent electrode (2032) and the support array (2031) in the liquid crystal layer (203) of the liquid crystal display (200) in a blanking interval of the liquid crystal display (200).

4. A device for detecting pressure in a mobile terminal, wherein, the mobile terminal has a liquid crystal display (200), a transparent electrode (2032), consisting of a plurality of transparent electrodes in a transverse and parallel arrangement and a plurality of transparent electrodes in a longitudinal and parallel arrangement, arranged in a liquid crystal layer (203) of the liquid crystal display (200), and the device comprises:
a detecting module (901), configured to detect a capacitance value between the transparent electrode (2032) and a support array (2031) in the liquid crystal layer (203) of the liquid crystal display (200); and
a first determining module (902), configured to determine a pressure value on the liquid crystal display (200) according to the capacitance value detected, wherein the pressure value is associated with the interaction of an operating member on the liquid crystal display (200), wherein, the detecting module (901) comprises:
a detecting unit (9011), configured to detect a voltage value in the transparent electrode (2032), comprising a first detecting sub-unit (90111), configured to detect a voltage value of each transparent electrode one by one according to a first preset period, or a second detecting sub-unit (90112), configured to detect a voltage value of each transparent electrode simultaneously according to a second preset period; and
a calculating unit (9012), configured to calculate the capacitance value between the transparent electrode (2032) and the support array (2031) in the liquid crystal layer (203) of the liquid crystal display (200) according to the voltage value, comprising:
a calculating sub-unit (90121), configured to calculate a capacitance value corresponding to each transparent electrode according to the voltage value in each transparent electrode; and
a choosing sub-unit (90122), configured to choose a maximum of capacitance values calculated as the capacitance value between the transparent electrode (2032) and the support array (2031) in the liquid crystal layer (203) of the liquid crystal display (200),
the device further comprising:
a choosing module (903), configured to choose a transparent electrode having a capacitance value different from that detected when the liquid crystal display (200) is not pressed by the operating member;
an obtaining module (904), configured to obtain a row identifier and a column identifier of the transparent electrode chosen; and
a second determining module (905), configured to determine a press location on the liquid crystal display (200) according to the row identifier and the column identifier obtained.

5. The device according to claim 4, wherein, the first determining module (902) is configured to:
obtain the pressure value corresponding to the capacitance value detected according to a preset correspondence between capacitance values and pressure values, and determine the pressure value performed on the liquid crystal display (200) according to the pressure value obtained.

## Patentansprüche

1. Verfahren zum Erfassen von Druck in einem mobilen Endgerät, wobei das mobile Endgerät eine Flüssigkristallanzeige (200), eine transparente Elektrode (2032) bestehend aus mehreren transparenten Elektroden in einer transversalen und parallelen Anordnung und mehreren transparenten Elektroden in einer longitudinalen und parallelen Anordnung hat, die in einer Flüssigkristallschicht (203) der Flüssigkristallanzeige (200) angeordnet sind, und wobei das Verfahren Folgendes beinhaltet:
Erfassen (101) eines Kapazitätswertes zwischen der transparenten Elektrode (2032) und einem Träger-Array (2031) in der Flüssigkristallschicht (203) der Flüssigkristallanzeige (200); und
Bestimmen (102) eines Druckwertes auf der Flüssigkristallanzeige (200) gemäß dem erfassten Kapazitätswert, wobei der Druckwert mit der Interaktion eines Betätigungselements auf der Flüssigkristallanzeige (200) assoziiert ist, wobei das Erfassen (101) eines Kapazitätswertes zwischen der transparenten Elektrode (2032) und einem Träger-Array (2031) in der Flüssigkristallschicht (203) der Flüssigkristallanzeige (200) Folgendes beinhaltet:
Erfassen (8011) eines Spannungswertes in der transparenten Elektrode (2032), das das Erfassen des Spannungswertes jeder transparenten Elektrode nacheinander gemäß einer ersten voreingestellten Periode oder das gleichzeitige Erfassen des Spannungswertes jeder transparenten Elektrode gemäß einer zweiten voreingestellten Periode beinhaltet; und
Berechnen des Kapazitätswertes zwischen der transparenten Elektrode (2032) und dem Träger-Array (2031) in der Flüssigkristallschicht (203) der Flüssigkristallanzeige (200) gemäß dem Spannungswert, das das Berechnen (80121) eines Kapazitätswertes entsprechend jeder transparenten Elektrode gemäß dem Spannungswert jeder transparenten Elektrode und das Auswählen (80122) eines Maximums von Kapazitätswerten beinhaltet, berechnet als der Kapazitätswert zwischen der transparenten Elektrode (2032) und dem Träger-Array (2031) in der Flüssigkristallschicht (203) der Flüssigkristallanzeige (200),
wobei das Verfahren nach dem Berechnen (80121) des Kapazitätswertes entsprechend jeder transparenten Elektrode ferner Folgendes beinhaltet:
Auswählen (803) einer transparenten Elektrode mit einem Kapazitätswert, der sich von dem unterscheidet, der erfasst wird, wenn die Flüssigkristallanzeige (200) nicht durch das Betätigungselement gedrückt wird;
Einholen (804) einer Reihenkennung und einer Spaltenkennung der ausgewählten transparenten Elektrode; und
Bestimmen (805) einer Drückposition auf der Flüssigkristallanzeige (200) gemäß der eingeholten Reihenkennung und Spaltenkennung.

2. Verfahren nach Anspruch 1, wobei das auf der Flüssigkristallanzeige (200) ausgeführte Bestimmen (102) eines Druckwertes gemäß dem erfassten Kapazitätswert Folgendes beinhaltet:
Einholen (802) des Druckwertes entsprechend dem gemäß einer voreingestellten Korrespondenz zwischen Kapazitätswerten und Druckwerten erfassten Kapazitätswert, und Bestimmen des Druckwertes, ausgeführt auf der Flüssigkristallanzeige (200) gemäß dem eingeholten Druckwert.

3. Verfahren nach Anspruch 1 oder 2, wobei das Erfassen (101) eines Kapazitätswertes zwischen der transparenten Elektrode (2032) und einem Träger-Array (2031) in der Flüssigkristallschicht (203) der Flüssigkristallanzeige (200) Folgendes beinhaltet:
Erfassen des Kapazitätswertes zwischen der transparenten Elektrode (2032) und dem Träger-Array (2031) in der Flüssigkristallschicht (203) der Flüssigkristallanzeige (200) in einem Austastintervall der Flüssigkristallanzeige (200).

4. Gerät zum Erfassen von Druck in einem mobilen Endgerät, wobei das mobile Endgerät eine Flüssigkristallanzeige (200), eine transparente Elektrode (2032) bestehend aus mehreren transparenten Elektroden in einer transversalen und parallelen Anordnung und mehreren transparenten Elektroden in einer longitudinalen und parallelen Anordnung hat, die in einer Flüssigkristallschicht (203) der Flüssigkristallanzeige (200) angeordnet sind, und wobei das Gerät Folgendes umfasst:
ein Erfassungsmodul (901), konfiguriert zum Erfassen eines Kapazitätswertes zwischen der transparenten Elektrode (2032) und einem Träger-Array (2031) in der Flüssigkristallschicht (203) der Flüssigkristallanzeige (200); und
ein erstes Bestimmungsmodul (902), konfiguriert zum Bestimmen eines Druckwertes auf der Flüssigkristallanzeige (200) gemäß dem erfassten Kapazitätswert, wobei der Druckwert mit der Interaktion eines Betätigungselements auf der Flüssigkristallanzeige (200) assoziiert ist, wobei das Erfassungsmodul (901) Folgendes umfasst:
eine Erfassungseinheit (9011), konfiguriert zum Erfassen eines Spannungswertes in der transparenten Elektrode (2032), mit einer ersten Erfassungssubeinheit (90111), konfiguriert zum Erfassen eines Spannungswertes jeder transparenten Elektrode nacheinander gemäß einer ersten voreingestellten Periode, oder einer zweiten Erfassungssubeinheit (90112), konfiguriert zum gleichzeitigen Erfassen eines Spannungswertes jeder transparenten Elektrode gemäß einer zweiten voreingestellten Periode; und
eine Recheneinheit (9012), konfiguriert zum Berechnen des Kapazitätswertes zwischen der transparenten Elektrode (2032) und dem Träger-Array (2031) in der Flüssigkristallschicht (203) der Flüssigkristallanzeige (200) gemäß dem Spannungswert, die Folgendes umfasst:
eine Rechensubeinheit (90121), konfiguriert zum Berechnen eines Kapazitätswertes entsprechend jeder transparenten Elektrode gemäß dem Spannungswert in jeder transparenten Elektrode; und
eine Auswahlsubeinheit (90122), konfiguriert zum Auswählen eines Maximums von Kapazitätswerten, berechnet als der Kapazitätswert zwischen der transparenten Elektrode (2032) und dem Träger-Array (2031) in der Flüssigkristallschicht (203) der Flüssigkristallanzeige (200), wobei das Gerät ferner Folgendes umfasst:
ein Auswahlmodul (903), konfiguriert zum Auswählen einer transparenten Elektrode mit einem Kapazitätswert, der sich von dem Kapazitätswert unterscheidet, der erfasst wird, wenn die Flüssigkristallanzeige (200) nicht durch das Betätigungselement gedrückt wird;
ein Einholmodul (904), konfiguriert zum Einholen einer Reihenkennung und einer Spaltenkennung der ausgewählten transparenten Elektrode; und
ein zweites Bestimmungsmodul (905), konfiguriert zum Bestimmen einer Drückposition auf der Flüssigkristallanzeige (200) gemäß der eingeholten Reihenkennung und Spaltenkennung.

5. Gerät nach Anspruch 4, wobei das erste Bestimmungsmodul (902) konfiguriert ist zum:
Einholen des Druckwertes entsprechend dem Kapazitätswert, erfasst gemäß einer voreingestellten Korrespondenz zwischen Kapazitätswerten und Druckwerten, und Bestimmen des Druckwertes, ausgeführt auf der Flüssigkristallanzeige (200) gemäß dem eingeholten Druckwert.

## Revendications

1. Procédé de détection de pression dans un terminal mobile, dans lequel le terminal mobile comporte un écran à cristaux liquides (200), une électrode transparente (2032), consistant en une pluralité d'électrodes transparentes disposées transversalement et parallèlement et une pluralité d'électrodes transparentes disposées longitudinalement et parallèlement, disposée dans une couche à cristaux liquides (203) de l'écran à cristaux liquides (200), et le procédé comprenant :
la détection (101) d'une valeur de capacité entre l'électrode transparente (2032) et une matrice de support (2031) dans la couche à cristaux liquides (203) de l'écran d'affichage à cristaux liquides (200) ; et
la détermination (102) d'une valeur de pression sur l'écran d'affichage à cristaux liquides (200) en fonction de la valeur de capacité détectée, la valeur de pression étant associée à l'interaction d'un opérateur sur l'écran d'affichage à cristaux liquides (200), dans lequel la détection (101) d'une valeur de capacité entre l'électrode transparente (2032) et une matrice de support (2031) dans la couche à cristaux liquides (203) de l'écran d'affichage à cristaux liquides (200) comprend :
la détection (8011) d'une valeur de tension dans l'électrode transparente (2032), comprenant la détection de la valeur de tension de chaque électrode transparente individuellement conformément à une première période prédéfinie, ou la détection de la valeur de tension de chaque électrode transparente simultanément conformément à une seconde période prédéfinie ; et
le calcul de la valeur de capacité entre l'électrode transparente (2032) et la matrice de support (2031) dans la couche à cristaux liquides (203) de l'écran d'affichage à cristaux liquides (200) en fonction de la valeur de tension, comprenant le calcul (80121) d'une valeur de capacité correspondant à chaque électrode transparente en fonction de la valeur de tension de chaque électrode transparente, et la sélection (80122) d'un maximum de valeurs de capacité calculées comme valeur de capacité entre l'électrode transparente (2032) et la matrice de support (2031) dans la couche à cristaux liquides (203) de l'écran d'affichage à cristaux liquides (200),
le procédé comprenant en outre, après le calcul (80121) de la valeur de capacité correspondant à chaque électrode transparente :
la sélection (803) d'une électrode transparente ayant une valeur de capacité différente de celle détectée quand l'opérateur n'appuie pas sur l'écran à cristaux liquides (200) ;
l'obtention (804) d'un identifiant de rangée et d'un identifiant de colonne de l'électrode transparente sélectionnée ; et
la détermination (805) d'un emplacement de pression sur l'écran d'affichage à cristaux liquides (200) en fonction de l'identifiant de rangée et de l'identifiant de colonne obtenus.

2. Procédé selon la revendication 1, dans lequel la détermination (102) d'une valeur de pression réalisée sur l'écran d'affichage à cristaux liquides (200) en fonction de la valeur de capacité détectée comprend :
l'obtention (802) de la valeur de pression correspondant à la valeur de capacité détectée conformément à une correspondance prédéfinie entre des valeurs de capacité et des valeurs de pression, et la détermination de la valeur de pression réalisée sur l'écran d'affichage à cristaux liquides (200) en fonction de la valeur de pression obtenue.

3. Procédé selon la revendication 1 ou 2, dans lequel la détection (101) d'une valeur de capacité entre l'électrode transparente (2032) et une matrice de support (2031) dans la couche à cristaux liquides (203) de l'écran d'affichage à cristaux liquides (200) comprend :
la détection de la valeur de capacité entre l'électrode transparente (2032) et la matrice de support (2031) dans la couche à cristaux liquides (203) de l'écran d'affichage à cristaux liquides (200) dans un intervalle de suppression de l'écran d'affichage à cristaux liquides (200).

4. Dispositif de détection de pression dans un terminal mobile, dans lequel le terminal mobile comporte un écran à cristaux liquides (200), une électrode transparente (2032), consistant en une pluralité d'électrodes transparentes disposées transversalement et parallèlement et une pluralité d'électrodes transparentes disposées longitudinalement et parallèlement, disposée dans une couche à cristaux liquides (203) de l'écran à cristaux liquides (200), et le dispositif comprenant :
un module de détection (901), configurée pour détecter une valeur de capacité entre l'électrode transparente (2032) et une matrice de support (2031) dans la couche à cristaux liquides (203) de l'écran d'affichage à cristaux liquides (200) ; et
un premier module de détermination (902), configuré pour déterminer une valeur de pression sur l'écran à cristaux liquides (200) en fonction de la valeur de capacité détectée et, la valeur de pression étant associée à l'interaction d'un opérateur sur l'écran d'affichage à cristaux liquides (200), dans lequel le module de détection (901) comprend :
une unité de détection (9011), configurée pour détecter une valeur de tension dans l'électrode transparente (2032), comprenant une première sous-unité de détection (90111), configurée pour détecter une valeur de tension de chaque électrode transparente individuellement conformément à une première période prédéfinie, ou une seconde sous-unité de détection (90112), configurée pour détecter une valeur de tension de chaque électrode transparente simultanément conformément à une seconde période prédéfinie ; et
une unité de calcul (9012), configurée pour calculer la valeur de capacité entre l'électrode transparente (2032) et la matrice de support (2031) dans la couche à cristaux liquides (203) de l'écran d'affichage à cristaux liquides (200) en fonction de la valeur de tension, comprenant :
une sous-unité de calcul (90121), configurée pour calculer une valeur de capacité correspondant à chaque électrode transparente en fonction de la valeur de tension dans chaque électrode transparente; et
une sous-unité de sélection (90122), configurée pour sélectionner un maximum de valeurs de capacité calculées comme valeur de capacité entre l'électrode transparente (2032) et la matrice de support (2031) dans la couche à cristaux liquides (203) de l'écran d'affichage à cristaux liquides (200),
le dispositif comprenant en outre :
un module de sélection (903), configuré pour sélectionner une électrode transparente ayant une valeur de capacité différente de celle détectée quand l'opérateur n'appuie pas sur l'écran à cristaux liquides (200) ;
un module d'obtention (904), configuré pour obtenir un identifiant de rangée et un identifiant de colonne de l'électrode transparente sélectionnée ; et
un second module de détermination (905), configuré pour déterminer un emplacement de pression sur l'écran d'affichage à cristaux liquides (200) en fonction de l'identifiant de rangée et de l'identifiant de colonne obtenus.

5. Dispositif selon la revendication 4, dans lequel le premier module de détermination (902) est configuré pour :
obtenir la valeur de pression correspondant à la valeur de capacité détectée conformément à une correspondance prédéfinie entre des valeurs de capacité et des valeurs de pression, et déterminer la valeur de pression réalisée sur l'écran d'affichage à cristaux liquides (200) en fonction de la valeur de pression obtenue.
